# EUROPÄISCHE PATENTSCHRIFT

(11) **EP 0 686 778 B1**
(45) Veröffentlichungstag und Bekanntmachung des Hinweises auf die Patenterteilung: **20.08.1997**
(21) Anmeldenummer: 95810257.6
(22) Anmeldetag: 19.04.1995
(51) Int. Cl.: F16B 13/14, F16B 12/04

(54) **Verfahren zum Befestigen eines Befestigungselementes in einem Bauteil aus Holz**
Method of fixing a fastening element in a wooden workpiece
Procédé pour fixer un élément de fixation dans un pièce en bois

(30) Priorität: 10.06.1994 DE 4420267
(43) Veröffentlichungstag der Anmeldung: 13.12.1995
(73) Patentinhaber: HILTI Aktiengesellschaft, 9494 Schaan (LI)
(72) Erfinder: Leibhard, Erich, D-81476 München (DE)
(74) Vertreter: Wildi, Roland

(56) Entgegenhaltungen:
- EP-A- 0 459 167
- DE-A- 2 728 742
- DE-A- 3 718 158
- DE-U- 9 308 294
- FR-A- 442 531
- GB-A- 1 051 558

## Beschreibung

Die Erfindung betrifft ein Verfahren zum Befestigen eines Befestigungselementes mit einer profilierten Oberfläche in einem vorgefertigten Bohrloch eines Bauteiles aus Holz mittels einer aushärtbaren Masse, die vor dem Einsetzen des Befestigungselementes dem Bohrloch zugeführt wird, wobei der grösste, rechtwinklig zur Längserstreckung des Befestigungselementes verlaufende Aussendurchmesser des Befestigungselementes im Bereich der profilierten Oberfläche kleiner ist als der kleinste Durchmesser des Bohrloches.

Ein Verfahren zum Befestigen eines Befestigungselementes im Bohrloch eines Bauteiles ist beispielsweise aus der DE-A-2 728 742 bekannt. Die profilierte Oberfläche sowie die Stimseite des Befestigungselementes wird mit einem vorbeschleunigten Kunstharz beschichtet und das beschichtete Befestigungselement wird anschliessend über ein Gemisch aus einem körnigen Füllstoff und einem Härter gerollt, wobei eine Ummantelung entsteht, bei der die Körner des Füllstoffes im Aussenbereich nur mit ihrer dem Befestigungselement zugewandten Seite haften. Anschliessend wird das derart ummantelte Befestigungselement in ein vorgefertigtes Bohrloch bis annähernd zum Boden desselben eingeschoben und mehrmals gedreht. Der Durchmesser des Bohrloches ist geringfügig grösser als der Aussendurchmesser des Befestigungselementes im Bereich der profilierten Oberfläche.

Nach einer entsprechenden Aushärtezeit ist das Befestigungselement über das ausgehärtete Gemisch fest mit dem Bauteil verbunden.

Die Kontaktfläche des Bohrloches ist kleiner als die Kontaktfläche des profilierten Befestigungselementes. Daher treten im Bereich zwischen dem ausgehärteten Gemisch und der Wandung des Bohrloches die meisten Schäden auf, wenn Zugkräfte auf das Befestigungselement übertragen werden.

Der Erfindung liegt die Aufgabe zugrunde, ein Verfahren zum Befestigen von Befestigungselementen mit einer profilierten Oberfläche in einem Bohrloch eines Bauteiles aus Holz zu schaffen, bei dem am Befestigungselement auftretende Zugkräfte sicher vom Bauteil aufgenommen werden, ohne dass ein vorzeitiges Versagen der Befestigungsstelle auftritt.

Erfindungsgemäss wird dies dadurch erreicht, dass vor dem Zuführen der aushärtbaren Masse die Wandung des Bohrloches unter Materialverdichtung mit Hilfe eines Werkzeuges mit einer Profilierung versehen wird.

Mit dem erfindungsgemäss angegebenen Verfahren wird der Wandung des Bohrloches eine grössere Kontaktfläche verliehen. Zudem wird aufgrund der Profilierung ein Formschluss zwischen der ausgehärteten Masse und der Wandung des Bohrloches erreicht.

Aus herstellungstechnischen Gründen ist die Profilierung vorzugsweise ein Gewindeprofil.

Zur Herstellung eines derartigen Gewindeprofiles kann zweckmässigerweise ein Werkzeug verwendet werden, das ein in das Bohrloch eindrehbarer Gewindeformer ist. Im Gegensatz zu einem Gewindeschneider besitzt der Gewindeformer keine Schneidkanten. Beim Eindrehen des Gewindeformers in das vorgefertigte Bohrloch graben sich die Zähne in die Wandung des Bohrloches, so dass eine Materialverdichtung des Bauteiles im Bereich des Bohrloches stattfindet, das mengenmässig dem Volumen der Zähne des Gewindeformers entspricht. Gleichzeitig mit der Erzeugung einer Profilierung an der Wandung des Bohrloches wird eine grössere Oberflächenfestigkeit im Bauteil erreicht. Diese erhöhte Oberflächenfestigkeit führt, nachdem ein Befestigungselement zusammen mit aushärtbarer Masse eingesetzt ist, zu einer weiteren Erhöhung der Auszugswerte in axialer Richtung.

Damit eine gute Verteilung der aushärtbaren Masse innerhalb des Bohrloches erreicht werden kann, wenn das Befestigungselement in das mit aushärtbarer Masse wenigstens teilweise verfüllte Bohrloch eingesetzt wird, weist der Aussendurchmesser des Befestigungselementes im Bereich der profilierten Oberfläche gegenüber dem Durchmesser des Bohrloches ein bestimmtes Abmessungsverhältnis auf. Dabei entspricht der Durchmesser des Bohrloches vorzugsweise dem 1,4- bis 2-fachen Aussendurchmesser des Befestigungselementes.

Ein kostengünstiges, nach dem erfindungsgemässen Verfahren verwendbares Befestigungselement ist zweckmässigerweise eine Gewindestange.

Die Erfindung wird anhand von Zeichnungen, die ein Ausführungsbeispiel wiedergeben, näher erläutert. Es zeigen:
- Fig. 1: die erfindungsgemässe Erzeugung einer Profilierung;
- Fig. 2: ein Befestigungselement, das mit Hilfe aushärtbarer Masse festgelegt ist.

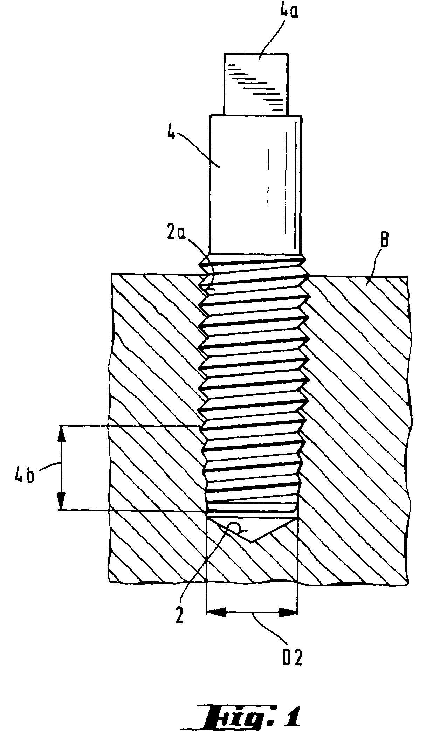

Bei dem in Fig. 1 dargestellten Verfahrensschritt wird in einem vorgefertigten Bohrloch 2 mit Hilfe eines Werkzeuges in der Gestalt eines Gewindeformers 4 eine Profilierung 2a in der Wandung des Bohrloches 2 erzeugt. Dabei wird Material des Bauteiles B radial verdichtet, das mengenmässig dem Volumen der Zähne des Gewindeformers 4 entspricht.

Jener Endbereich des Gewindeformers 4, der den Zähnen gegenüberliegt, dient dem Angriff eines nicht dargestellten, geeigneten Gerätes, welches drehschlüssig mit einer Schlüsselweite 4a des Gewindeformers 4 in Verbindung bringbar ist und dem Verdrehen des Gewindeformers 4 in Umfangsrichtung dient.

Der Durchmesser des Bohrloches 2 entspricht im wesentlichen dem Kerndurchmesser des Gewindeprofiles des Gewindeformers 4.

Der Gewindeformer 4 besitzt am eindrehrichtungsseitigen Endbereich eine Verjüngung 4b, die dem besseren Zentrieren des Gewindeformers 4 während des Eindrehvorganges in das Bohrloch 2 dient. Nach der Erzeugung der Profilierung 2a in der Wandung des Bohrloches 2 wird der Gewindeformer 4 wieder aus dem Bohrloch 2 herausgeschraubt.

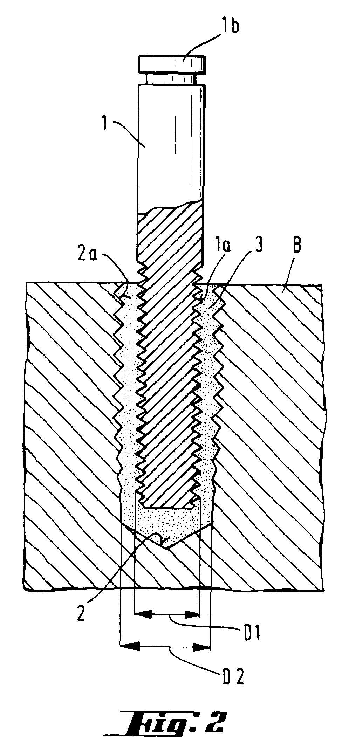

Wie Fig. 2 zeigt, wird das Bohrloch 2 vor dem Einsetzen eines Befestigungselementes 1 mit einer aushärtbaren Masse 3 wenigstens teilweise verfüllt. Beim Einsetzen des Befestigungselementes 1 verteilt sich die aushärtbare Masse 3 im Bohrloch 2 um das Befestigungselement 1 herum.

Der grösste, rechtwinklig zur Längserstreckung des Befestigungselementes 1 verlaufende Durchmesser D1 im Bereich der profilierten Oberfläche 1a ist kleiner ausgebildet als der kleinste Durchmesser D2 des Bohrloches 2. Der Durchmesser D2 des Bohrloches 2 entspricht dabei dem 1,4- bis 2-fachen Aussendurchmessers des mit der profilierten Oberfläche 1a versehenen Bereiches des Befestigungselementes 1.

Das Befestigungselement 1 besitzt in jenem Endbereich, der der profilierten Oberfläche 1a gegenüberliegt, ein Lastangriffsmittel 1b.

## Patentansprüche

1. Verfahren zum Befestigen eines Befestigungselementes (1) mit einer profilierten Oberfläche (1a) in einem vorgefertigten Bohrloch (2) eines Bauteiles (B) aus Holz mittels einer aushärtbaren Masse (3), die vor dem Einsetzen des Befestigungselementes (1) dem Bohrloch (2) zugeführt wird, wobei der grösste, rechtwinklig zur Längserstreckung des Befestigungselementes (1) verlaufende Aussendurchmesser des Befestigungselementes (1) im Bereich der profilierten Oberfläche (1a) kleiner ist als der kleinste Durchmesser (D2) des Bohrloches (2), **dadurch gekennzeichnet**, dass vor dem Zuführen der aushärtbaren Masse (3) die Wandung des Bohrloches (2) unter Materialverdichtung mit Hilfe eines Werkzeuges mit einer Profilierung (2a) versehen wird.

2. Verfahren nach Anspruch 1, dadurch gekennzeichnet, dass die Profilierung (2a) ein Gewindeprofil ist.

3. Verfahren nach Anspruch 2, dadurch gekennzeichnet, dass das Werkzeug zur Herstellung des Gewindeprofils ein in das Bohrloch (2) eindrehbarer Gewindeformer (4) ist.

4. Verfahren nach einem der Ansprüche 1 bis 3, dadurch gekennzeichnet, dass der Durchmesser (D2) des Bohrloches (2) dem 1,4- bis 2-fachen Aussendurchmesser des mit der profilierten Oberfläche (1a) versehenen Bereiches des Befestigungselementes (1) entspricht.

5. Verfahren nach einem der Ansprüche 1 bis 4, dadurch gekennzeichnet, dass das Befestigungselement (1) eine Gewindestange ist.

## Claims

1. Method of fixing a fastening element (1) having a profiled surface (1a) in a prefabricated drilled hole (2) of a wooden workpiece (B) by means of a curable compound (3), which is supplied to the drilled hole (2) prior to the insertion of the fastening element (1), the largest external diameter of the fastening element (1), which diameter runs at right angles to the longitudinal extent of the fastening element (1), being smaller, in the region of the profiled surface (1a), than the smallest diameter (D2) of the drilled hole (2), characterized in that, prior to the supply of the curable compound (3), the walls of the drilled hole (2) are provided, with material compression by means of a tool, with a profiling (2a).

2. Method according to Claim 1, characterized in that the profiling (2a) is a thread profile.

3. Method according to Claim 2, characterized in that the tool for producing the thread profile is a thread former (4) which can be rotated into the drilled hole (2).

4. Method according to one of Claims 1 to 3, characterized in that the diameter (D2) of the drilled hole (2) corresponds to 1.4 to 2 times the external diameter of that region of the fastening element (1) which is provided with the profiled surface (1a).

5. Method according to one of Claims 1 to 4, characterized in that the fastening element (1) is a threaded rod.

## Revendications

1. Procédé pour fixer un élément de fixation (1) avec une surface profilée (1a) dans un trou (2) percé à l'avance dans une pièce en bois (B), au moyen d'une masse (3) durcissable qui est introduite dans le trou (2) avant la mise en place de l'élément de fixation (1), le diamètre extérieur maximum de l'élément de fixation (1) qui s'étend orthogonalement à l'extension longitudinale de l'élément de fixation (1) étant plus petit dans la région de la surface profilée (1a) que le diamètre minimum (D2) du trou (2), caractérisé en ce qu'avant l'introduction de la masse (3) durcissable, la paroi du trou (2) est munie d'un profilage (2a), avec compression de matière, à l'aide d'un outil.

2. Procédé selon la revendication 1, caractérisé en ce que le profilage (2a) est un profil de filetage.

3. Procédé selon la revendication 2, caractérisé en ce que l'outil pour la réalisation du profil de filetage est un dispositif à mouler les filets (4) qui peut être vissé dans le trou (2).

4. Procédé selon l'une des revendications 1 à 3, caractérisé en ce que le diamètre (D2) du trou (2) correspond à 1,4 à 2 fois le diamètre extérieur de la partie de l'élément de fixation (1) présentant la surface profilée (1a).

5. Procédé selon l'une des revendications 1 à 4, caractérisé en ce que l'élément de fixation (1) est une tige filetée.
